# EUROPEAN PATENT SPECIFICATION

(11) **EP 1 074 445 B1**
(45) Date of publication and mention of the grant of the patent: **15.11.2006**
(21) Application number: 99125365.9
(22) Date of filing: 20.12.1999
(51) Int. Cl.: B60T 7/06, B60R 21/09

(54) **Braking pedal assembly**
Bremspedalsystem
Système de pédale de frein

(30) Priority: 09.07.1999 IT TO990602
(43) Date of publication of application: 07.02.2001
(73) Proprietor: FIAT AUTO S.p.A., 10135 Torino (IT)
(72) Inventor: Cornacchia, Giorgio, 10141 Torino (IT); Cordero, Renato, 12048 Sommariva Bosco (Cuneo) (IT)
(74) Representative: Di Francesco, Gianni

(56) References cited:
- EP-A- 0 659 615
- EP-A- 0 827 885
- EP-A- 0 895 902
- DE-A- 4 409 324
- DE-A- 4 442 122
- DE-A- 19 534 225
- DE-A- 19 631 868
- DE-A- 19 652 013
- DE-C- 19 631 212
- DE-U- 29 715 372
- FR-A- 2 739 077
- FR-A- 2 740 882

## Description

### DESCRIPTION OF THE INVENTION

The present invention relates to a braking pedal assembly allowing disengagement of the brake pedal from its joint with the servo brake so that the driver's leg is not injured in case of frontal collision.

Is has been recently proved that in case of road accidents, and especially in case of frontal collisions, the driver's legs are injured because the pedals move backwards being pushed by the propulsion and transmission gears in the motor vehicles with front engine and drive.

Therefore the brake pedal can be considered as a dangerous element and must be disengaged at the moment of the impact. Several systems are known which disengage the brake pedal at the moment of the impact, e.g. from Patent EP-A-659615 which refers to a system in which the brake pedal is supported by two axis respectively fixed to two collapsible semipermanent moulds. As a consequence of the impact said moulds collapse and the fulcrum of the pedal doesn't move towards the driver's legs.

It is an object of the present invention to provide an alternative system which allows to disengage the brake pedal at the moment of an impact without having to build any collapsible element. This solution allows to spare space in the area where the pedals are located.

This object is achieved according to the present invention by means of a device adapted to disengage the brake pedal in case of an impact characterised by what is set forth in claim 1.

Additional characteristics and advantages will become evident from the following description which refers to the appended drawings which are provided as non restrictive illustration of a preferred embodiment of the invention, in which:

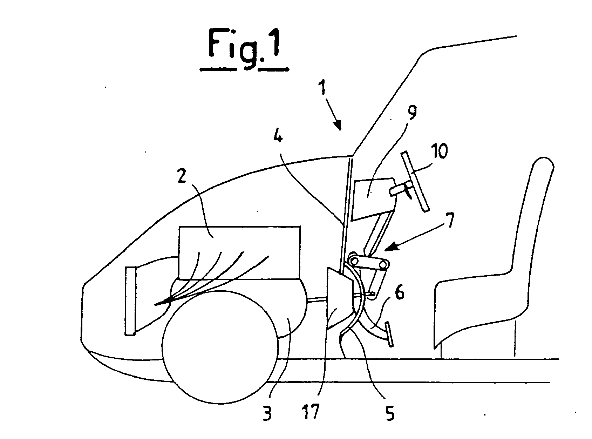

figure 1 is a schematic section view of the front part of a motor vehicle in which the device of the invention has been implemented;
figures 2 and 3 are enlarged views of an embodiment of the device according to the invention in the position taken before and after the impact of the motor vehicle.

With reference to the figures, reference number 1 indicates the front part of a motor vehicle provided of an engine 2 and of a transmission unit 3. The support 5 of the pedals of the motor vehicle is implemented on the fireproof wall 4, and in the figure only the brake pedal 6 and its joint 7 are shown.

A support bracket 9 for the steering column of the steering wheel 10 is normally located above the pedals. During the impact, the bracket 9 should not be displaced at all, being it fixed on the upper and side part of the body. The brake pedal 6 is pivoted at 11 to the support of the pedals 5 and is connected to two arms 13 and 14 which, in turn, are connected to a push rod 15 acting on the servo brake 17.

The arm 13 which consists of two adjacent parts is rotatably connected to the upper end of the brake pedal 6 at one side while at the other side the double arm 13 is united to an end of the arm 14 by means of a through bolt 18 which is kept in its position by a release spring 19.

A strut 20 is placed under the bracket 9 being integral with it. Its free end 21 is wedge shaped, and is placed near the double arm 13, so that it can fit between the two parts of it in case of displacement.

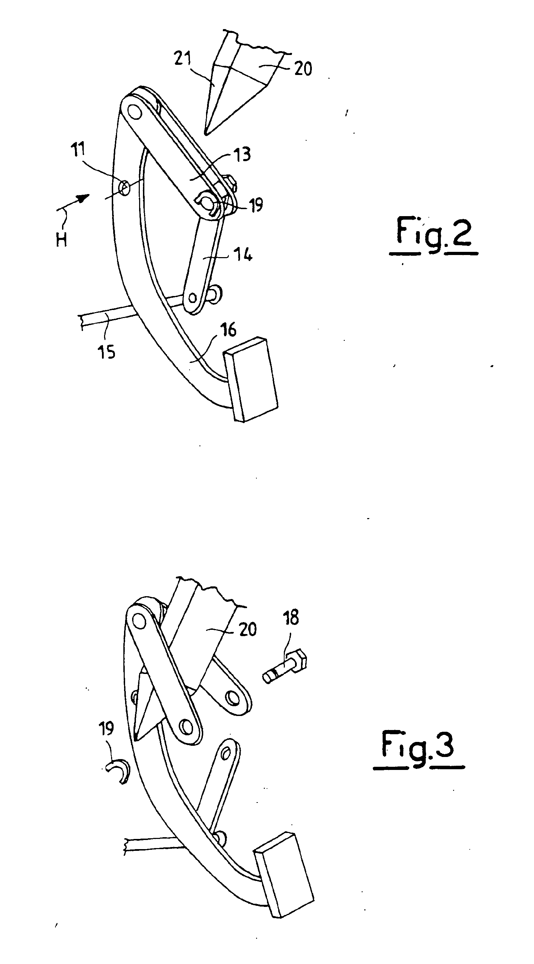

In case of front impact, the support of the pedals 5 is displaced in the direction of arrow H (figure 2) since it is pushed by the engine and transmission unit 2, 3. Said displacement causes the end 21 of the strut 20, which is still in its initial position being it connected to the fixed bracket, fit into the two arms 13 thus putting them apart (figure 3) and causing the release of the spring 19 which releases the bolt 18. In this way the joint of the brake pedal 6 is disengaged from the arm 14 and the pedal can rotate on its axis 11 without representing a fixed stopping point for the driver's leg.

As it becomes evident from the above description, the device according to the invention is simple and its costs are very low. It doesn't affect the longitudinal space where the pedals are located and it is not subject to damages or deterioration in time. The application of the aforementioned system is not limited to the brake pedal but can be applied also to the clutch pedal, without going beyond the scope of the invention as it is set forth in the appended claims.

## Claims

1. Brake pedal assembly consisting of a brake pedal (6), a servo brake (17) and a joint (7) from the brake pedal to the servo brake; said pedal being placed on the fireproof wall (5) under the support bracket (9) of the steering column of the steering wheel (10) and said joint (7) consisting of at least two arms (13, 14) articulated together and a push rod (15) to control the servo brake (17), said first arm (13) of the two arms being articulated at its other end with the brake pedal (6) and said second arm (14) being articulated at its other end with said push rod (15), **characterised in that** the first of the two arms (13) is consisting of two adjacent parts located in such a way that in case of backward motion of the pedal, due to a frontal collision, said two adjacent parts are separated from the second arm (14) by a strut (20) integral with said support bracket (9) of the steering column of the steering wheel.

2. Brake pedal assembly as claimed in claim 1 **characterised in that** the first arm (13) is connected to the second arm (14) by means of a through bolt (18) which is kept in its position by a release spring (19).

## Patentansprüche

1. Bremspedalanordnung, bestehend aus einem Bremspedal (6), einer Servobremse (17) und einem Verbindungsstück (7) von dem Bremspedal zu der Servobremse; wobei das Pedal auf der feuerfesten Wandung (5) unter der Halterung (9) der Lenksäule des Steuerrads (10) angeordnet ist, und wobei das Verbindungsstück (7) aus mindestens zwei Armen (13, 14), die zusammen angelenkt sind, und einer Stößelstange (15), um die Servobremse (17) zu steuern, besteht, wobei der erste Arm (13) der beiden Arme an seinem anderen Ende mit dem Bremspedal (6) und der zweite Arm (14) an seinem anderen Ende mit der Stößelstange (15) angelenkt sind, **dadurch gekennzeichnet, dass** der erste der beiden Arme (13) aus zwei nebeneinander liegenden Teilen besteht, die sich derart befinden, dass im Falle eines durch einen Frontalzusammenstoß verursachten Rücklaufs des Pedals die beiden nebeneinander liegenden Teile durch eine mit der Halterung (9) der Lenksäule des Steuerrads einstückige Strebe (20) von dem zweiten Arm (14) getrennt werden.

2. Bremspedalanordnung nach Anspruch 1, **dadurch gekennzeichnet, dass** der erste Arm (13) mit dem zweiten Arm (14) mittels eines durchgehenden Bolzens (18) verbunden ist, der durch eine Rückzugfeder (19) an Ort und Stelle gehalten wird.

## Revendications

1. Ensemble de pédale de frein constitué d'une pédale de frein (6), d'un servofrein (17) et d'un moyen de liaison (7) entre la pédale de frein et le servofrein ; ladite pédale étant placée sur la paroi ignifuge (5) sous la fixation de support (9) de la colonne de direction du volant (10), et ledit moyen de liaison (7) étant constitué d'au moins deux bras (13, 14) articulés ensemble et d'une tige de poussée (15) permettant de commander le servofrein (17), ledit premier bras (13) des deux bras étant articulé au niveau de son autre extrémité avec la pédale de frein (6), et ledit second bras (14) étant articulé au niveau de son autre extrémité avec ladite tige de poussée (15), **caractérisé en ce que** le premier des deux bras (13) est constitué de deux éléments adjacents agencés de telle sorte que, dans le cas d'un déplacement arrière de la pédale, consécutif à une collision frontale, lesdits deux éléments adjacents sont séparés du second bras (14) par un mât (20) constitué d'un seul tenant avec la fixation de support (9) de la colonne de direction du volant.

2. Ensemble de pédale de frein selon la revendication 1, **caractérisé en ce que** le premier bras (13) est raccordé au second bras (14) à l'aide d'un boulon traversant (18) qui est maintenu en place par un ressort expulsable (19).
